# EUROPEAN PATENT APPLICATION

(11) **EP 4 181 481 A1**
(43) Date of publication of application: **17.05.2023**
(21) Application number: 21851454.5
(22) Date of filing: 28.07.2021
(51) Int. Cl.: H04L 47/80

(54) **MULTICAST RESOURCE OBTAINING METHOD, ACCESS NETWORK DEVICE, AND CORE NETWORK DEVICE**

(30) Priority: 30.07.2020 CN 202010753607
(71) Applicant: Vivo Mobile Communication Co., Ltd., Dongguan, Guangdong 523863 (CN)
(72) Inventor: ZHANG, Yanxia, Dongguan, Guangdong 523863 (CN); XIE, Zhenhua, Dongguan, Guangdong 523863 (CN)
(74) Representative: Murgitroyd & Company
(86) International application number: PCT/CN2021/108990
(87) International publication number: WO 2022/022581

(57) **Abstract**

This application discloses a method for obtaining a multicast resource, an access network device, and a core network device. The method for obtaining a multicast resource applied to the access network device includes: receiving first information sent by a core network device, where the first information includes multicast service information of a target multicast service; obtaining, according to the first information, a multicast resource of the target multicast service; and sending second information to a second access network device through the core network device, where the second information includes information of the multicast resource.

## Description

### CROSS-REFERENCE TO RELATED APPLICATIONS

This application claims the priority of Chinese Patent Application No. 202010753607.2 filed in China on July 30, 2020, which is incorporated herein by reference in its entirety.

### TECHNICAL FIELD

This application belongs to the field of wireless communication technology, and in particular, to a method for obtaining a multicast resource, an access network device, and a core network device.

### BACKGROUND

A long term evolution (Long Term Evolution, LTE) system supports a multimedia broadcast multicast service (Multimedia Broadcast Multicast Service, MBMS). New radio (New Radio, NR) also supports a broadcast multicast service. In an NR system, if UE is switched while receiving a multicast service, a switched target base station does not know whether the UE is receiving and/or is interested in receiving the multicast service. Therefore, it cannot be determined whether to reserve an air interface resource for the multicast service that the UE is receiving and/or interested in receiving, so that it is difficult to guarantee continuity of multicast service data during moving.

### SUMMARY

Embodiments of this application aim to provide a method for obtaining a multicast resource, an access network device, and a core network device, to assist the access network device to determine whether to reserve a multicast resource.

To resolve the foregoing technical problems, this application is implemented as follows:
According to a first aspect, a method for obtaining a multicast resource is provided, and applied to a first access network device. The method includes:
receiving first information sent by a core network device, where the first information includes multicast service information of a target multicast service;
obtaining, according to the first information, a multicast resource of the target multicast service; and
sending second information to a second access network device through the core network device, where the second information includes information of the multicast resource.

According to a second aspect, a method for obtaining a multicast resource is provided, and applied to a core network device. The method includes:
receiving a handover request sent by a second access network device; and
sending first information to a first access network device based on the handover request, where the first information includes multicast service information of a target multicast service, and
the first information is used for the first access network device to obtain a multicast resource of the target multicast service.

According to a third aspect, an apparatus for obtaining a multicast resource is provided. The apparatus includes:
a receiving module, configured to receive first information sent by a core network device, where the first information includes multicast service information of a target multicast service;
an obtaining module, configured to obtain, according to the first information, a multicast resource of the target multicast service; and
a first sending module, configured to send second information to a second access network device through the core network device, where the second information includes information of the multicast resource.

According to a fourth aspect, an apparatus for obtaining a multicast resource is provided. The apparatus includes:
a first receiving module, configured to receive a handover request sent by a second access network device; and
a first sending module, configured to send first information to a first access network device based on the handover request, where the first information includes multicast service information of a target multicast service, and
the first information is used for the first access network device to obtain a multicast resource of the target multicast service.

According to a fifth aspect, an access network device is provided, the terminal includes a processor, a memory, and a program or an instruction stored on the memory and executable on the processor. When the program or the instruction, is executed by the processor, steps of the method according to the first aspect are implemented.

According to a sixth aspect, a core network device is provided, the terminal includes a processor, a memory, and a program or an instruction stored on the memory and executable on the processor. When the program or the instruction is executed by the processor, steps of the method according to the second aspect are implemented.

According to a seventh aspect, a readable storage medium is provided, storing a program or an instruction. When the program or the instruction is executed by a processor, steps of the method according to the first aspect are implemented, or when the program or the instruction is executed by the processor, steps of the method according to the second aspect are implemented.

According to an eighth aspect, a chip is provided, including a processor and a communication interface, the communication interface being coupled to the processor, and the processor being configured to execute a program or an instruction of a network side device to implement the method according to the first aspect.

According to a ninth aspect, a chip is provided, including a processor and a communication interface, the communication interface being coupled to the processor, and the processor being configured to execute a program or an instruction of a network side device to implement the method according to the second aspect.

According to a tenth aspect, a program product is provided, and stored in a non-volatile storage medium, the program product being executed by at least one processor to implement the method according to the first aspect.

According to an eleventh aspect, a program product is provided, and stored in a non-volatile storage medium, the program product being executed by at least one processor to implement the method according to the second aspect.

In the embodiments of this application, multicast service information is sent to a target base station through a core network device, to assist the target base station to determine whether to reserve a multicast resource and ensure normal operation of a multicast service.

### BRIEF DESCRIPTION OF THE DRAWINGS

FIG. 1 is a block diagram of a wireless communication system to which an embodiment of this application is applied.
FIG. 2 is a schematic flowchart of a method for obtaining a multicast resource according to an embodiment of this application.
FIG. 3 is a schematic flowchart of a method for obtaining a multicast resource according to another embodiment of this application.
FIG. 4 is a schematic flowchart of a method for obtaining a multicast resource according to another embodiment of this application.
FIG. 5 is a schematic flowchart of a method for obtaining a multicast resource according to another embodiment of this application.
FIG. 6 is a schematic flowchart of a method for obtaining a multicast resource according to another embodiment of this application.
FIG. 7 is a schematic structural diagram of an apparatus for obtaining a multicast resource according to an embodiment of this application.
FIG. 8 is a schematic structural diagram of an apparatus for obtaining a multicast resource according to another embodiment of this application.
FIG. 9 is a schematic structural diagram of an access network device according to another embodiment of this application.
FIG. 10 is a schematic structural diagram of a core network device according to another embodiment of this application.

### DETAILED DESCRIPTION

The following clearly and completely describes the technical solutions in the embodiments of this application with reference to the accompanying drawings in the embodiments of this application. Apparently, the described embodiments are some rather than all of the embodiments of this application. All other embodiments obtained by a person of ordinary skill in the art based on the embodiments of this application without creative efforts shall fall within the protection scope of this application.

The terms such as "first" and "second" in the specification and the claims of this application are intended to distinguish between similar objects, but are not used for describing a specific sequence or a chronological order. It is to be understood that the data used in such a way is interchangeable in proper circumstances, so that the embodiments of this application can be implemented in other sequences than the sequence illustrated or described herein. In addition, objects distinguished by "first" and "second" are usually of one type, and a quantity of the objects is not limited. For example, a first object may be one or more than one. In addition, "and/or" in the specification and claims represents at least one of connected objects. The character "/" generally indicates an "or" relationship between the associated objects.

It is worth noting that technologies described in the embodiments of this application are not limited to an LTE-Advanced (LTE-Advanced, LTE-A) system of long term evolution (Long Term Evolution, LTE)/LTE, but may further be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FMA) and other systems. The terms "system" and "network" in the embodiments of this application are often used interchangeably, and the described technologies may be used for not only the foregoing systems and radio technologies, but also other systems and radio technologies. However, the following description describes a new radio (New Radio, NR) system for a purpose of example, and an NR term is used in many parts of the following description, although these technologies are also applied to an application other than an NR system application, such as a 6th generation (6th Generation, 6G) communication system.

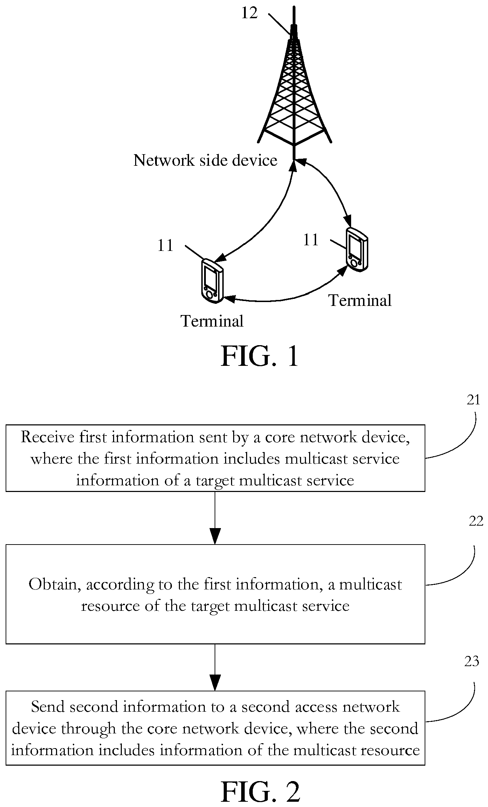

FIG. 1 is a block diagram of a wireless communication system to which an embodiment of this application is applied. The wireless communication system includes a terminal 11 and a network side device 12. The terminal 11 may also be referred to as a terminal device or user equipment (User Equipment, UE). The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (Vehicle User Equipment, VUE), pedestrian user equipment (Pedestrian User Equipment, PUE), and the like. The wearable device includes: a bracelet, a headphone, glasses, and the like. It needs to be noted that, the embodiments of this application do not limit a specific type of the terminal 11. The network side device 12 may be an access network device (such as a base station) or a core network. The base station may be referred to as node B, evolved node B, access point, base transceiver station (Base Transceiver Station, BTS), radio base station, radio transceiver, basic service set (Basic Service Set, BSS), extended service set (Extended Service Set, ESS), node B, evolved node B (eNB), home node B, home evolved node B, WLAN access point, WiFi node, transmitting receiving point (Transmitting Receiving Point, TRP), or some another suitable term in the described art. As long as the same technical effect is achieved, the base station is not limited to a specific technical term. It needs to be noted that, in the embodiments of this application, only a base station in the NR system is used as an example, but a specific type of the base station is not limited.

First of all, the following briefly describes technical contents related to this application.

In a long term evolution (Long Term Evolution, LTE) system, a multimedia broadcast multicast service (Multimedia Broadcast Multicast Service, MBMS) may be sent through an MBMS multimedia broadcast multicast service single frequency network (Multimedia Broadcast multicast service Single Frequency Network, MBSFN) and single cell point to multipoint (SC-PTM).
(1) MBSFN mode: A plurality of cells in a same MBSFN region send same multicast services at the same time, which is equivalent to receiving same data through a plurality of paths from a user equipment (User Equipment, UE, also referred to as terminal) side. Control information (control channel parameter, traffic channel parameter and/or scheduling information, etc.) and data information of the MBMS are sent in a broadcast mode, so that both UE in an idle (idle) state and UE in a connected state can receive the MBMS service, and the data information of the MBMS is only sent in a subframe of the MBSFN. Control information related to the multicast service is sent through system information (e.g. SIB 13) and a multicast control channel (Multicast Control Channel, MCCH), and data is sent through a multicast traffic channel (Multicast Traffic Channel, MTCH).
(2) SC-PTM: It is sent through a physical downlink shared channel (Physical Downlink Shared Channel, PDSCH) scheduled by a physical downlink control channel (Physical Downlink Control Channel, PDCCH). Control information is sent through system information (e.g. SIB20) and a single cell multicast control channel (Single Cell Multicast Control Channel, SC-MCCH), and data is sent through a single cell multicast traffic channel (Single Cell Multicast Traffic Channel, SC-MTCH). The SC-MCCH is sent through a PDSCH scheduled by a single cell radio network temporary identity (Single Cell Radio Network Temporary Identity, SC-RNTI) PDCCH, and the SC-MTCH is sent through a PDSCH scheduled by a G-RNTI PDCCH.

The following describes the method for obtaining a multicast resource, access network device, and core network device provided in the embodiments of this application in detail through specific embodiments and application scenarios thereof with reference to the accompanying drawings.

Referring to FIG. 2, a method for obtaining a multicast resource provided in the embodiments of this application is applied to a first access network device, the method including:
Step 21. Receive first information sent by a core network device, where the first information includes multicast service information of a target multicast service.

Optionally, the first information includes multicast service information of at least one target multicast service. For example, the first information may carry multicast service information of a multicast service 1 and a multicast service 2.

Step 22. Obtain, according to the first information, a multicast resource of the target multicast service.

Step 23. Send second information to a second access network device through the core network device, where the second information includes information of the multicast resource.

In the embodiments of this application, optionally, the information of the multicast resource includes scheduling resource information (such as G-RNTI) of the multicast service, resource location information of the multicast service, etc.

It needs to be noted that, the first access network device in the embodiment of this application is a multicast access network device, i.e. an access network device supporting the multicast service.

The first access network device may be a base station or another access network device.

In the embodiment of this application, the multicast service information is sent to the access network device through the core network device, to assist the access network device to determine whether to reserve a multicast resource and ensure normal operation of the multicast service.

In the embodiment of this application, optionally, the multicast service information includes a multicast service identifier of the target multicast service, so that the first access network device can know the resource needs to be reserved for which multicast service or multicast services.

In the embodiment of this application, optionally, the multicast service information further includes quality of service (Quality of Service, QoS) requirement information corresponding to the target multicast service, so that the first access network device can reserve appropriate resources for the target multicast service according to the QoS requirement information of the target multicast service.

In the embodiment of this application, optionally, the obtaining, according to the first information, the multicast resource of the target multicast service includes at least one of the following:
1) Reserve the multicast resource for the target multicast service in a case that the target multicast service is a service supported by the first access network device.

For example, the first access network device may store a first table, the first table includes a multicast service supported by the first access network device, and if the target multicast service is in the first table, the target multicast service is the service supported by the first access network device.

As an example, the first access network device receives first information provided by a core network, the first information includes multicast service information of a multicast service 1 and a multicast service 2, the multicast service 1 is a multicast service supported by the first access network device, and the multicast service 2 is a multicast service not supported by the first access network device, then the first access network device only reserves an air interface resource for the supported multicast service, i.e. only reserves the air interface resource for the multicast service 1.

2) Reserve the multicast resource for the target multicast service in a case that the target multicast service does not belong to a service that is not supported by the first access network device.

For example, the first access network device may store a second table, the second table includes a multicast service not supported by the first access network device, and if the target multicast service is not in the second table, the target multicast service does not belong to the service not supported by the first access network device.

As an example, the first access network device receives first information provided by a core network, the first information includes multicast service information of a multicast service 1 and a multicast service 2, the multicast service 1 is a multicast service supported by the first access network device, and the multicast service 2 is a multicast service not supported by the first access network device, then the first access network device refuses to or does not reserve an air interface resource for a multicast service that is not supported by the first access network device, i.e. refuses to or does not reserve the air interface resource for the multicast service 2.

3) Reserve the multicast resource for the target multicast service in a case that a radio resource of the first access network device is enough to be allocated to a radio resource required by the target multicast service.

As an example, the first access network device receives first information provided by a core network, the first information includes multicast service information of a multicast service 1 and a multicast service 2, and a radio resource of the first access network device can only reserve an air interface resource for one multicast service, then the first access network device only reserves the air interface resource for one multicast service, for example, reserves the air interface resource for the multicast service 1. The first access network device may arbitrarily select to reserve the air interface resource for which multicast service or multicast services, i.e. the first access network device may reserve the air interface resource for the multicast service 1 or the multicast service 2, and a specific behavior depends on an implementation of the first access network device. In another example, the first access network device may determine to reserve the air interface resource for which piece of multicast service information or pieces of multicast service information according to QoS requirement information corresponding to the multicast service. For example, if a delay requirement corresponding to the multicast service 1 is less than that of the multicast service 2, the first access network device reserves the air interface resource for a multicast service with small delay requirement, i.e. reserves the air interface resource for the multicast service 1.

4) Reserve the multicast resource for the target multicast service, in a case that the target multicast service is a service supported by the first access network device and that the radio resource of the first access network device is enough to be allocated to the radio resource required by the target multicast service.

5) Reserve the multicast resource for the target multicast service, in a case that the target multicast service does not belong to a service that is not supported by the first access network device and that the radio resource of the first access network device is enough to be allocated to the radio resource required by the target multicast service.

6) Obtain the multicast resource of the target multicast service in a case that the first access network device has provided a radio resource of the target multicast service.

In some embodiments of this application, optionally, a behavior of the first access network device includes at least one of the following:
1) Reserve the multicast resource for the target multicast service in a case that a target multicast service corresponding to a multicast service identifier carried in the multicast service information is the service supported by the first access network device.
2) Do not or refuse to reserve the multicast resource for the target multicast service in a case that the target multicast service corresponding to the multicast service identifier carried in the multicast service information is the service not supported by the first access network device.
3) Reserve the multicast resource for the target multicast service in a case that the target multicast service corresponding to the multicast service identifier carried in the multicast service information does not belong to the service not supported by the first access network device.
4) Do not or refuse to reserve the multicast resource for the target multicast service in a case that the target multicast service corresponding to the multicast service identifier carried in the multicast service information belongs to the service not supported by the first access network device.
5) The first access network device reserves the multicast resource for the target multicast service in a case that the radio resource of the first access network device is enough to be allocated to a radio resource required by a target multicast service corresponding to the multicast service identifier in the multicast service information.
6) The first access network device does not reserve the multicast resource for the target multicast service in a case that the radio resource of the first access network device is not enough to be allocated to the radio resource required by a target multicast service of the multicast service identifier in the multicast service information.
7) The first access network device reserves the multicast resource for the target multicast service, in a case that a target multicast service corresponding to a multicast service identifier carried by the multicast service information is the service supported by the first access network device and that the radio resource of the first access network device is enough to be allocated to the radio resource required by the target multicast service corresponding to the multicast service identifier in the multicast service information.
8) The first access network device reserves the multicast resource for the target multicast service, in a case that the target multicast service corresponding to the multicast service identifier carried by the multicast service information does not belong to the service not supported by the first access network device and that the radio resource of the first access network device is enough to be allocated to the radio resource required by the target multicast service corresponding to the multicast service identifier in the multicast service information.
9) Obtain the multicast resource of the target multicast service in a case that the first access network device has provided a radio resource of the target multicast service.

The method for obtaining a multicast resource in the embodiments of this application is applied to a handover scenario of a terminal, and may also be applied to another scenario. The method for obtaining a multicast resource in the embodiments of this application is described by using an example in which the method is applied to the handover scenario of the terminal.

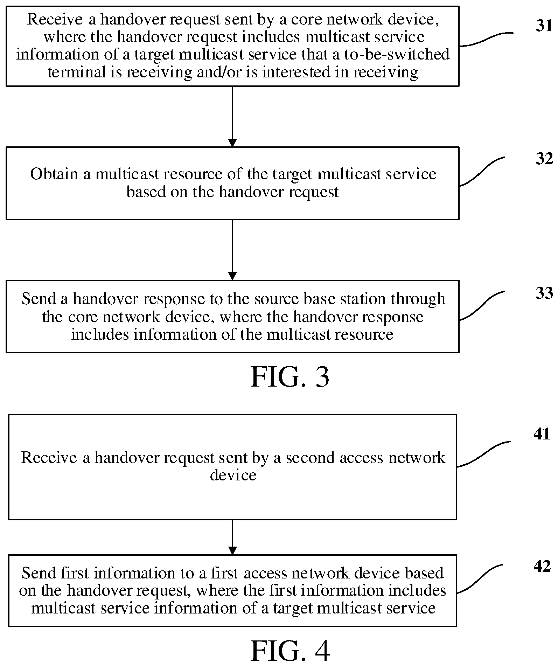

Referring to FIG. 3, according to the embodiments of this application, a method for obtaining a multicast resource is further provided, and is applied to a target base station in a handover process, the method including:
Step 31. Receive a handover request sent by a core network device, where the handover request includes multicast service information of a target multicast service that a to-be-switched terminal is receiving and/or is interested in receiving.

In the embodiments of this application, a multicast service that is interested in being received may refer to a multicast service that the terminal expects to receive but has not started to receive, or may be a multicast service that the terminal is receiving.

The handover request is the first information in the foregoing embodiment. The existing handover request signaling is used for carrying the multicast service information, which is no need to add new signaling, and can be simply implemented.

The handover request is, for example, a Handover Request message.

In the embodiment of this application, a terminal can receive a target multicast service through a protocol data unit (Protocol Data Unit, PDU) session. If the terminal receives the multicast service through a first PDU session at a source base station, the handover request includes multicast service information corresponding to the target multicast service received through the first PDU session.

In the embodiment of this application, the terminal may further receive the multicast service through a multicast mode. If the terminal receives the multicast service through the multicast mode at the source base station, the handover request includes the multicast service information corresponding to the target multicast service that the terminal is receiving and/or is interested in receiving.

Certainly, in some other embodiments of this application, in a handover scenario, the multicast service information may not be carried by using the handover request, and the first information may be sent separately, or the multicast service information may be carried as the first information through other signaling in a handover process.

Step 32. Obtain a multicast resource of the target multicast service based on the handover request.

In the embodiment of this application, optionally, the method for obtaining a multicast resource may further include: If a handover request without the multicast service information sent by the core network device is received, the multicast resource is not reserved.

Step 33. Send a handover response to the source base station through the core network device, where the handover response includes information of the multicast resource.

The handover response is the second information in the foregoing embodiment. The existing handover response signaling is used for carrying the information of the multicast resource, which is no need to add new signaling, and can be simply implemented.

Certainly, in some other embodiments of this application, in a handover scenario, the information of the multicast resource may not be carried by using the handover response, and the second information may be sent separately, or the information of the multicast resource may be carried as the second information through other signaling in a handover process.

In the embodiment of this application, optionally, after the handover response is sent to the core network device, the method further includes:
receiving a handover confirmation sent by the terminal; and
sending handover completion information to the core network device.

In the embodiment of this application, during a terminal handover period, the core network device may send the handover request to the target base station (i.e. the first access network device), and carry the multicast service information of a target multicast service that a to-be-switched terminal is receiving and/or is interested in receiving. The target base station may reserve the multicast resource for the target multicast service that the to-be-switched terminal is receiving and/or is interested in receiving according to the handover request, so as to ensure continuity of the multicast service during the terminal handover period.

Referring to FIG. 4, according to the embodiments of this application, a method for obtaining a multicast resource is provided, and is applied to a core network device, the method including:
Step 41. Receive a handover request sent by a second access network device.
Step 42. Send first information to a first access network device based on the handover request, where the first information includes multicast service information of a target multicast service, and
the first information is used for the first access network device to obtain a multicast resource of the target multicast service.

Optionally, the first information includes multicast service information of at least one target multicast service. For example, the first information may carry multicast service information of a multicast service 1 and a multicast service 2.

In the embodiment of this application, the core network device may include: at least one of an access and mobility management function (Access and Mobility Management Function, AMF), a session management function (Session Management Function, SMF), and a user plane function (User Plane Function, UPF).

In the embodiment of this application, the multicast service information is sent to the access network device through the core network device, to assist the access network device to determine whether to reserve a multicast resource and ensure normal operation of the multicast service.

In the embodiment of this application, optionally, the multicast service information includes a multicast service identifier of the target multicast service, so that the first access network device can know the resource needs to be reserved for which multicast service or multicast services.

In the embodiment of this application, optionally, the multicast service information further includes QoS requirement information corresponding to the target multicast service, so that the first access network device can reserve appropriate resources for the target multicast service according to the QoS requirement information of the target multicast service.

In the embodiment of this application, optionally, after the first information is sent to the first access network device, the method further includes: receiving second information sent by the first access network device and forwarding the second information to the second access network device, where the second information includes the multicast resource of the target multicast service obtained by the first access network device based on the first information, thereby enabling, according to the second information, the core network device to perform a corresponding operation, for example, a core network resource is allocated for the target multicast service, and/or information of the multicast resource is sent to another base station, etc.

In the embodiment of this application, optionally, after the first information is sent to the first access network device, the method further includes:
receiving third information sent by the first access network device, where the third information includes resource information for receiving the target multicast service; and
reserving, according to the third information, a core network resource for the target multicast service.

The method for obtaining a multicast resource in the embodiments of this application is applied to a handover scenario of a terminal, and may also be applied to another scenario. The method for obtaining a multicast resource in the embodiments of this application is described by using an example in which the method is applied to the handover scenario of the terminal.

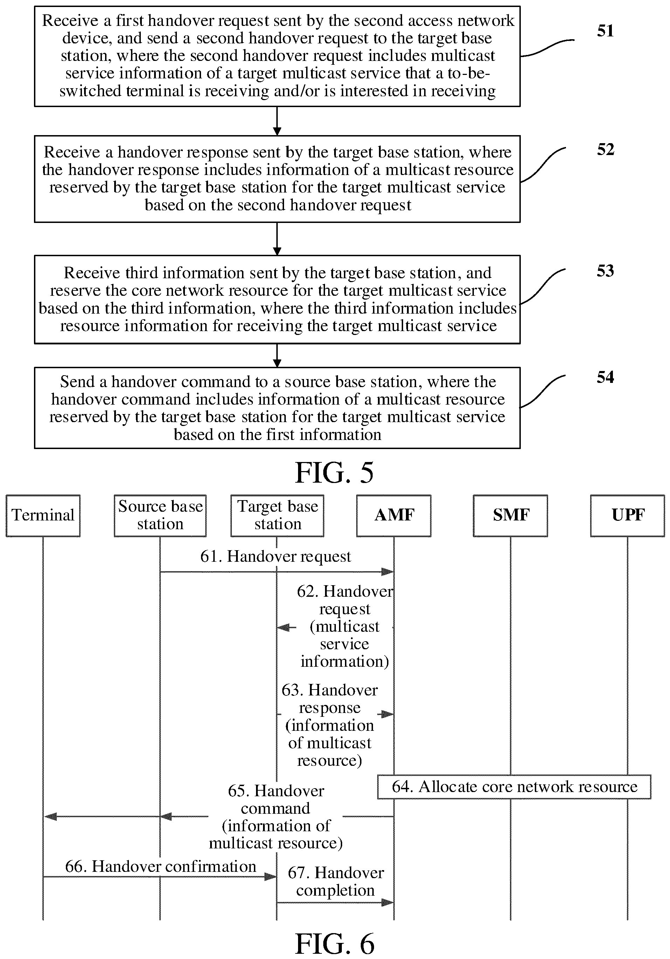

Referring to FIG. 5, according to the embodiments of this application, a method for obtaining a multicast resource is further provided, and is applied to a core network device, the method including:
Step 51. Receive a first handover request sent by the second access network device, and send a second handover request to the target base station (i.e. the first access network device in the foregoing embodiment), where the second handover request includes multicast service information of a target multicast service that a to-be-switched terminal is receiving and/or is interested in receiving.

In the embodiment of this application, a multicast service that is interested in being received may refer to a multicast service that the terminal expects to receive but has not started to receive, or may be a multicast service that the terminal is receiving.

In the embodiment of this application, optionally, the first handover request may carry the multicast service information of the target multicast service that the to-be-switched terminal is receiving and/or is interested in receiving.

The second handover request is the first information in the foregoing embodiment. The existing handover request signaling is used for carrying the multicast service information, which is no need to add new signaling, and can be simply implemented.

In the embodiment of this application, a terminal can receive a target multicast service through a PDU session. If the terminal receives the multicast service through a first PDU session at a source base station, the second handover request includes multicast service information corresponding to the target multicast service received through the first PDU session.

In the embodiment of this application, the terminal may further receive the multicast service through a multicast mode. If the terminal receives the multicast service through the multicast mode at the source base station, the second handover request includes the multicast service information corresponding to the target multicast service that the terminal is receiving and/or is interested in receiving.

Certainly, in some other embodiments of this application, in a handover scenario, the multicast service information may not be carried by using the second handover request, and the first information may be sent separately, or the multicast service information may be carried as the first information through other signaling in a handover process.

Step 52. Receive a handover response sent by the target base station, where the handover response includes information of a multicast resource reserved by the target base station for the target multicast service based on the second handover request.

The handover response is the second information in the foregoing embodiment. The existing handover response signaling is used for carrying the information of the multicast resource, which is no need to add new signaling, and can be simply implemented.

Certainly, in some other embodiments of this application, in a handover scenario, the information of the multicast resource may not be carried by using the handover response, and the second information may be sent separately, or the information of the multicast resource may be carried as the second information through other signaling in a handover process.

Step 53. Receive, according to the third information, third information sent by the target base station, and reserve the core network resource for the target multicast, where the third information includes resource information for receiving the target multicast service.

The core network resource aims to establish a multicast service channel between the target base station and the core network device.

Step 54. Send a handover command to a source base station, where the handover command includes information of a multicast resource reserved by the target base station for the target multicast service based on the first information.

The handover command is the third information in the foregoing embodiment. The existing handover command signaling is used for carrying the information of the multicast resource, which is no need to add new signaling, and can be simply implemented.

Certainly, in some other embodiments of this application, in a handover scenario, the information of the multicast resource may not be carried by using the handover command, and the third information may be sent separately, or the information of the multicast resource may be carried as the third information through other signaling in a handover process.

In the embodiment of this application, during terminal handover, the core network device may send the handover request to the target base station, and carry the multicast service information of a multicast service that a to-be-switched terminal is receiving and/or is interested in receiving. The target base station may reserve the multicast resource for the multicast service that the to-be-switched terminal is receiving and/or is interested in receiving according to the handover request, so as to ensure continuity of the multicast service during the terminal handover period.

Referring to FIG. 6, according to the embodiments of this application, a method for obtaining a multicast resource is further provided, the method including:
Step 61. The source base station decides to perform a handover operation, selects the target base station (which can be based on measurement report or candidate cell information, or can be selected independently), and sends a handover request, such as a Handover Required message, to the core network device, where the handover request can indicate a resource required for handover.

The core network device may include: at least one of an AMF, an SMF, and a UPF.

Step 62. The core network device sends a handover request (such as a Handover Request message) to the target base station. In addition, the multicast service information may be carried in the handover request. The multicast service information includes a multicast service identifier and QoS requirement information corresponding to the multicast service identifier.

Exemplarily, if the terminal receives the multicast service through the first PDU session (session) at the source base station, the handover request may carry multicast service information corresponding to the multicast service received through the first PDU session.

In another example, if the terminal receives the multicast service in the source base station through the multicast mode, the handover request may carry multicast service information corresponding to a multicast service that the terminal is receiving or is interested in receiving.

Step 63. The target base station returns a handover response (such as a Handover Response message) to the core network device, where the handover response may carry information of the reserved multicast resource.

If the handover request does not carry the multicast service information, the multicast resource is not reserved. If the handover request includes the multicast service information, the target base station reserves a corresponding multicast resource based on the multicast service information. A behavior of the target base station includes one or a combination of the following:
1) Reserve the multicast resource for the target multicast service in a case that a target multicast service corresponding to a multicast service identifier carried in the multicast service information is the service supported by the target base station.
2) Do not or refuse to reserve the multicast resource for the target multicast service in a case that the target multicast service corresponding to the multicast service identifier carried in the multicast service information is the service not supported by the target base station.
3) Reserve the multicast resource for the target multicast service in a case that the target multicast service corresponding to the multicast service identifier carried in the multicast service information does not belong to the service not supported by the target base station.
4) Do not or refuse to reserve the multicast resource for the target multicast service in a case that the target multicast service corresponding to the multicast service identifier carried in the multicast service information belongs to the service not supported by the target base station.
5) The target base station reserves the multicast resource for the target multicast service in a case that the radio resource of the target base station is enough to be allocated to a radio resource required by a target multicast service corresponding to the multicast service identifier in the multicast service information.
6) The target base station does not reserve the multicast resource for the target multicast service in a case that the radio resource of the target base station is not enough to be allocated to the radio resource required by a target multicast service of the multicast service identifier in the multicast service information.
7) The target base station reserves the multicast resource for the target multicast service, in a case that a target multicast service corresponding to a multicast service identifier carried by the multicast service information is the service supported by the target base station and that the radio resource of the target base station is enough to be allocated to the radio resource required by the target multicast service corresponding to the multicast service identifier in the multicast service information.
8) The target base station reserves the multicast resource for the target multicast service, in a case that the target multicast service corresponding to the multicast service identifier carried by the multicast service information does not belong to the service not supported by the target base station and that the radio resource of the target base station is enough to be allocated to the radio resource required by the target multicast service corresponding to the multicast service identifier in the multicast service information.
9) Obtain the multicast resource of the target multicast service in a case that the
target base station has provided a radio resource of the target multicast service.

Step 64. The core network device allocates the core network resource for the multicast service.

Exemplarily, the core network device allocates the core network resource for a multicast service for which the multicast resource is reserved for the target base station.

Step 65. The core network device sends a handover command (such as a Handover Command message) to the source base station, and carries multicast resource information reserved by the target base station, and the source base station informs the terminal to switch to the target base station.

Step 66. The terminal switches to the target base station and sends a handover confirmation (such as a Handover Confirm message) to the target base station.

Step 67. The target base station sends handover completion information (such as a Handover Complete message) to the core network device.

It needs to be noted that, according to the method for obtaining a multicast resource provided in the embodiments of this application, an executive body may be an apparatus for obtaining a multicast resource, or a control module configured to perform the method for obtaining a multicast resource in the apparatus for obtaining a multicast resource. In the embodiments of this application, an example in which the method for obtaining a multicast resource is performed by the apparatus for obtaining a multicast resource is used for describing the apparatus for obtaining a multicast resource provided in the embodiments of this application.

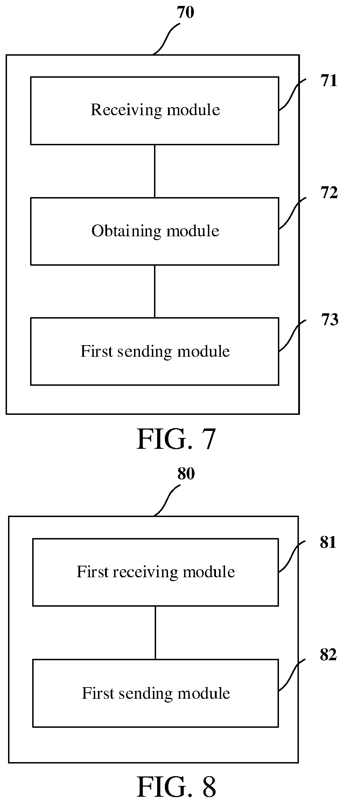

Referring to FIG. 7, according to the embodiments of this application, an apparatus 70 for obtaining a multicast resource is provided, the apparatus including:
a receiving module 71, configured to receive first information sent by a core network device, where the first information includes multicast service information of a target multicast service;
an obtaining module 72, configured to obtain, according to the first information, a multicast resource of the target multicast; and
a first sending module 73, configured to send second information to a second access network device through the core network device, where the second information includes information of the multicast resource.

Optionally, the apparatus 70 for obtaining the multicast resource further includes:
a second sending module, configured to send third information to the core network device, where the third information includes resource information for receiving the target multicast service.

Optionally, the multicast service information includes a multicast service identifier of the target multicast service.

Optionally, the multicast service information further includes QoS requirement information of the target multicast service.

Optionally, the obtaining, according to the first information, the multicast resource of the target multicast service includes at least one of the following:
reserving the multicast resource for the target multicast service in a case that the target multicast service is a service supported by the first access network device;
reserving the multicast resource for the target multicast service in a case that the target multicast service does not belong to a service that is not supported by the first access network device;
reserving the multicast resource for the target multicast service in a case that a radio resource of the first access network device is enough to be allocated to a radio resource required by the target multicast service;
reserving the multicast resource for the target multicast service, in a case that the target multicast service is a service supported by the first access network device and that the radio resource of the first access network device is enough to be allocated to the radio resource required by the target multicast service;
reserving the multicast resource for the target multicast service, in a case that the target multicast service does not belong to a service that is not supported by the first access network device and that the radio resource of the first access network device is enough to be allocated to the radio resource required by the target multicast service; and
obtaining the multicast resource of the target multicast service in a case that the first access network device has provided a radio resource of the target multicast service.

The apparatus for obtaining a multicast resource provided in the embodiments of this application can implement each process implemented by a method embodiment of FIG. 2 or FIG. 3 and achieve the same technical effect, which will not be repeated herein to avoid repetition.

Referring to FIG. 8, according to the embodiments of this application, an apparatus 80 for obtaining a multicast resource is provided, the apparatus including:
a first receiving module 81, configured to receive a handover request sent by a second access network device; and
a first sending module 82, configured to send first information to a first access network device based on the handover request, where the first information includes multicast service information of a target multicast service, and
the first information is used for the first access network device to obtain a multicast resource of the target multicast service.

Optionally, the apparatus 80 for obtaining a multicast resource further includes:
a second receiving module, configured to receive second information sent by the first access network device and forward the second information to the second access network device, where the second information includes the multicast resource of the target multicast service obtained by the first access network device based on the first information.

Optionally, the apparatus 80 for obtaining the multicast resource further includes:
a third receiving module, configured to receive third information sent by the first access network device, where the third information includes resource information for receiving the target multicast service; and
a reserving module, configured to reserve, according to the third information, a core network resource for the target multicast service.

Optionally, the multicast service information includes a multicast service identifier of the target multicast service.

Optionally, the multicast service information further includes QoS requirement information corresponding to the target multicast service.

The apparatus for obtaining a multicast resource provided in the embodiments of this application can implement each process implemented by a method embodiment of FIG. 4 or FIG. 5 and achieve the same technical effect. To avoid repetition, details are not described herein again.

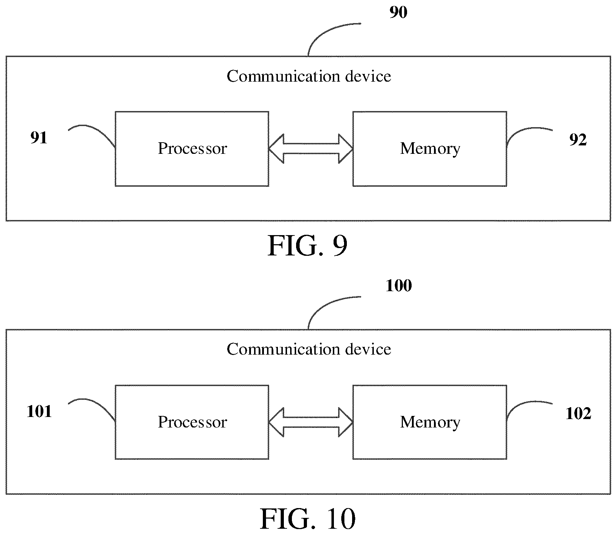

As shown in FIG. 9, the embodiments of this application further provide an access network device 90, including a processor 91, a memory 92, and a program or an instruction stored in the memory 92 and executable on the processor 91. When the program or instruction is executed by the processor 91, processes of the foregoing embodiments of the method for obtaining a multicast resource applied to the access network device are implemented, and the same technical effect can be achieved. To avoid repetition, details are not described herein again.

As shown in FIG. 10, the embodiments of this application further provide a core network device 100, including a processor 101, a memory 102, and a program or an instruction stored in the memory 102 and executable on the processor 101. When the program or instruction is executed by the processor 101, processes of the foregoing embodiments of the method for obtaining a multicast resource applied to the core network device are implemented, and the same technical effect can be achieved. To avoid repetition, details are not described herein again.

The embodiments of this application further provide a readable storage medium storing a program or an instruction. When the program or instruction is executed by a processor, processes of the foregoing embodiments of the method for obtaining a multicast resource applied to an access network device are implemented, and the same technical effect can be achieved. To avoid repetition, details are not described herein again.

The embodiments of this application further provide a readable storage medium storing a program or an instruction. When the program or instruction is executed by a processor, processes of the foregoing embodiments of the method for obtaining a multicast resource applied to a core network device are implemented, and the same technical effect can be achieved. To avoid repetition, details are not described herein again.

The processor is a processor in the terminal in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

The embodiments of this application further provide a chip, including a processor and a communication interface. The communication interface is coupled to the processor, and the processor is configured to execute a program or an instruction of a network side device to implement processes of the foregoing embodiments of the method for obtaining a multicast resource applied to an access network device, and the same technical effect can be achieved. To avoid repetition, details are not described herein again.

The embodiments of this application further provide a chip, including a processor and a communication interface. The communication interface is coupled to the processor, and the processor is configured to execute a program or an instruction of a network side device to implement processes of the foregoing embodiments of the method for obtaining a multicast resource applied to a core network device, and the same technical effect can be achieved. To avoid repetition, details are not described herein again.

It should be noted that, the chip mentioned in the embodiments of this application may also be referred to as a system-level chip, a system chip, a chip system, a system on chip, or the like.

The embodiments of this application further provide a program product stored in a non-volatile storage medium. The program product is executed by at least one processor to implement processes of the foregoing embodiments of the method for obtaining a multicast resource applied to an access network device, and the same technical effect can be achieved. To avoid repetition, details are not described herein again.

The embodiments of this application further provide a program product stored in a non-volatile storage medium. The program product is executed by at least one processor to implement processes of the foregoing embodiments of the method for obtaining a multicast resource applied to a core network device, and the same technical effect can be achieved. To avoid repetition, details are not described herein again.

It needs to be noted that, terms "include", "comprise", and any variants thereof are intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or apparatus. Without more limitations, elements defined by a sentence "including one" does not exclude that there are still other same elements in the process, method, object, or apparatus. Furthermore, it should be noted that a scope of the methods and apparatus in the embodiments of this application is not limited to performing the functions in the order shown or discussed, but may also include performing the functions in a substantially simultaneous manner or in the reverse order depending on the functions involved. For example, the methods described may be performed in an order different from that described, and various steps may also be added, omitted, or combined. In addition, features described with reference to some examples may be combined in other examples.

Through the descriptions of the foregoing implementations, a person skilled in the art may clearly understand that the method according to the foregoing embodiments may be implemented through software and a necessary general hardware platform, and certainly, may also be implemented by hardware, but in many cases, the former manner is a better implementation. Based on such an understanding, the technical solutions of this application essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods according to the embodiments of this application.

Although the embodiments of this application have been described above with reference to the accompanying drawings, this application is not limited to the specific embodiments described above, and the specific embodiments described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A method for obtaining a multicast resource, applied to a first access network device, the method comprising:
receiving first information sent by a core network device; wherein
the first information comprises multicast service information of a target multicast service;
obtaining, according to the first information, a multicast resource of the target multicast service; and
sending second information to a second access network device through the core network device; wherein
the second information comprises information of the multicast resource.

2. The method according to claim 1, wherein after the receiving first information sent by the core network device, the method further comprises:
sending third information to the core network device; wherein
the third information comprises resource information for receiving the target multicast service.

3. The method according to claim 1, wherein the multicast service information comprises a multicast service identifier of the target multicast service.

4. The method according to claim 3, wherein the multicast service information further comprises quality of service QoS requirement information of the target multicast service.

5. The method according to claim 1, wherein the obtaining, according to the first information, the multicast resource of the target multicast service comprises at least one of following:
reserving the multicast resource for the target multicast service in a case that the target multicast service is a service supported by the first access network device;
reserving the multicast resource for the target multicast service in a case that the target multicast service does not belong to a service that is not supported by the first access network device;
reserving the multicast resource for the target multicast service in a case that a radio resource of the first access network device is enough to be allocated to a radio resource required by the target multicast service;
reserving the multicast resource for the target multicast service, in a case that the target multicast service is a service supported by the first access network device and that the radio resource of the first access network device is enough to be allocated to the radio resource required by the target multicast service;
reserving the multicast resource for the target multicast service, in a case that the target multicast service does not belong to a service that is not supported by the first access network device and that the radio resource of the first access network device is enough to be allocated to the radio resource required by the target multicast service; and
obtaining the multicast resource of the target multicast service in a case that the first access network device has provided a radio resource of the target multicast service.

6. A method for obtaining a multicast resource, applied to a core network device, the method comprising:
receiving a handover request sent by a second access network device; and
sending first information to a first access network device based on the handover request;
wherein
the first information comprises multicast service information of a target multicast service, and
the first information is used for the first access network device to obtain a multicast resource of the target multicast service.

7. The method according to claim 6, wherein after the sending first information to the first access network device, the method further comprises:
receiving second information sent by the first access network device and forwarding the second information to the second access network device; wherein
the second information comprises the multicast resource of the target multicast service obtained by the first access network device based on the first information.

8. The method according to claim 6, wherein after the sending first information to the first access network device, the method further comprises:
receiving third information sent by the first access network device; wherein
the third information comprises resource information for receiving the target multicast service; and
reserving, according to the third information, a core network resource for the target multicast service.

9. The method according to claim 6, wherein the multicast service information comprises a multicast service identifier of the target multicast service.

10. The method according to claim 9, wherein the multicast service information further comprises quality of service QoS requirement information corresponding to the target multicast service.

11. An apparatus for obtaining a multicast resource, comprising:
a receiving module, configured to receive first information sent by a core network device; wherein
the first information comprises multicast service information of a target multicast service;
an obtaining module, configured to obtain, according to the first information, a multicast resource of the target multicast service; and
a first sending module, configured to send second information to a second access network device through the core network device; wherein
the second information comprises information of the multicast resource.

12. The apparatus according to claim 11, further comprising:
a second sending module, configured to send third information to the core network device; wherein
the third information comprises resource information for receiving the target multicast service.

13. The apparatus according to claim 11, wherein the multicast service information comprises a multicast service identifier of the target multicast service.

14. The apparatus according to claim 13, wherein the multicast service information further comprises quality of service QoS requirement information of the target multicast service.

15. The apparatus according to claim 13, wherein
the obtaining, according to the first information, a multicast resource of the target multicast service comprises at least one of following:
reserving the multicast resource for the target multicast service in a case that the target multicast service is a service supported by a first access network device;
reserving the multicast resource for the target multicast service in a case that the target multicast service does not belong to a service that is not supported by the first access network device;
reserving the multicast resource for the target multicast service in a case that a radio resource of the first access network device is enough to be allocated to a radio resource required by the target multicast service;
reserving the multicast resource for the target multicast service, in a case that the target multicast service is a service supported by the first access network device and that the radio resource of the first access network device is enough to be allocated to the radio resource required by the target multicast service;
reserving the multicast resource for the target multicast service, in a case that the target multicast service does not belong to a service that is not supported by the first access network device and that the radio resource of the first access network device is enough to be allocated to the radio resource required by the target multicast service; and
obtaining the multicast resource of the target multicast service in a case that the first access network device has provided a radio resource of the target multicast service.

16. An apparatus for obtaining a multicast resource, comprising:
a first receiving module, configured to receive a handover request sent by a second access network device; and
a first sending module, configured to send first information to a first access network device based on the handover request; wherein
the first information comprises multicast service information of a target multicast service, and the first information is used for the first access network device to obtain a multicast resource of the target multicast service.

17. The apparatus according to claim 16, further comprising:
a second receiving module, configured to receive second information sent by the first access network device and forward the second information to the second access network device; wherein
the second information comprises the multicast resource of the target multicast service obtained by the first access network device based on the first information.

18. The apparatus according to claim 16, further comprising:
a third receiving module, configured to receive third information sent by the first access network device; wherein
the third information comprises resource information for receiving the target multicast service; and
a reserving module, configured to reserve, according to the third information, a core network resource for the target multicast service.

19. The apparatus according to claim 16, wherein the multicast service information comprises a multicast service identifier of the target multicast service.

20. The apparatus according to claim 19, wherein the multicast service information further comprises quality of service QoS requirement information corresponding to the target multicast service.

21. An access network device, comprising a processor, a memory, and a program or an instruction stored on the memory and executable on the processor, wherein when the program or the instruction is executed by the processor, steps of the method for obtaining a multicast resource according to any one of claims 1 to 5 are implemented.

22. A core network device, comprising a processor, a memory, and a program or an instruction stored on the memory and executable on the processor, wherein when the program or the instruction is executed by the processor, steps of the method for obtaining a multicast resource according to any one of claims 6 to 10 are implemented.

23. A readable storage medium, storing a program or an instruction, wherein when the program or the instruction is executed by a processor, the method for obtaining a multicast resource according to any one of claims 1 to 5 is implemented, or when the program or the instruction is executed by a processor, the method for obtaining a multicast resource according to any one of claims 6 to 10 is implemented.

24. A chip, comprising a processor and a communication interface, the communication interface being coupled to the processor, and the processor being configured to execute a program or an instruction to implement the method for obtaining a multicast resource according to any one of claims 1 to 10.

25. A program product, stored in a non-volatile storage medium, wherein when the program product is executed by at least one processor, the method for obtaining a multicast resource according to any one of claims 1 to 10 is implemented.

26. An access network device, configured to perform steps of the method for obtaining a multicast resource according to any one of claims 1 to 5.

27. A core network device, configured to perform steps of the method for obtaining a multicast resource according to any one of claims 6 to 10.
